# EUROPÄISCHE PATENTSCHRIFT

(11) **EP 3 556 000 B1**
(45) Veröffentlichungstag und Bekanntmachung des Hinweises auf die Patenterteilung: **23.06.2021**
(21) Anmeldenummer: 17705392.3
(22) Anmeldetag: 15.02.2017
(51) Int. Cl.: H02M 1/32, H02M 7/483

(54) **MODUL FÜR MODULAREN MEHRPUNKTUMRICHTER MIT KURZSCHLIESSER UND KONDENSATORSTROMBEGRENZUNG**
MODULE FOR MODULAR MULTILEVEL CONVERTER WITH CROWBAR AND CAPACITOR CURRENT LIMITATION
MODULE D'UN CONVERTISSEUR MODULAIRE MULTI-NIVEAUX AVEC COURT-CIRCUITEUR ET LIMITEUR DE COURANT DU CONDENSATEUR

(43) Veröffentlichungstag der Anmeldung: 23.10.2019
(73) Patentinhaber: Siemens Energy Global GmbH & Co. KG, 81739 München (DE)
(72) Erfinder: ECKEL, Hans-Günter, 18059 Rostock (DE); JUNGHANS, Christoph, 18057 Rostock (DE); SCHMITT, Daniel, 92353 Postbauer-Heng (DE)
(86) Internationale Anmeldenummer: PCT/EP2017/053374
(87) Internationale Veröffentlichungsnummer: WO 2018/149493

(56) Entgegenhaltungen:
- WO-A1-2013/044961
- WO-A1-2014/090272
- WO-A1-2016/128643
- WO-A1-2016/203517
- JP-A- 2013 169 088
- US-A1- 2014 226 374
- NICOLAS P LABBE: "An innovative current-limiting device for automotive micro-hybrid starter motors", ELECTRICAL MACHINES (ICEM), 2012 XXTH INTERNATIONAL CONFERENCE ON, IEEE, 2. September 2012 (2012-09-02), Seiten 1935-1940, XP032464981, DOI: 10.1109/ICELMACH.2012.6350146 ISBN: 978-1-4673-0143-5

## Beschreibung

Die Erfindung betrifft ein Umrichtermodul für einen Spannungszwischenkreisumrichter mit einer Leistungshalbleiterschaltung mit wenigstens zwei Leistungshalbleiterschaltern, einem Energiespeicher in einer Parallelschaltung zu der Leistungshalbleiterschaltung sowie einer Schutzvorrichtung umfassend einen steuerbaren Schutz-Halbleiter, der in einer Parallelschaltung zum Energiespeicher angeordnet ist.

Ein solches Umrichtermodul ist aus der DE 10 323 220 A1 bekannt. Die Leistungshalbleiterschaltung des bekannten Umrichtermoduls ist als eine Vollbrückenschaltung ausgebildet. Sie umfasst zwei Reihenschaltungen von jeweils zwei Leistungshalbleiterschalteinheiten, die jeweils einen ein- und ausschaltbaren Halbleiterschalter sowie eine dazu antiparallele Freilaufdiode aufweisen. Die externen Anschlüsse der Vollbrückenschaltung sind mit Potenzialpunkten zwischen den Leistungshalbleiterschalteinheiten jeder Reihenschaltung angeordnet. Zugleich ist in einer Parallelschaltung zu Leistungshalbleiterschaltung ein Energiespeicher in Form eines Kondensators angeordnet. Der Schutz-Halbleiter des bekannten Umrichtermoduls ist eine Rückschwingdiode bzw. ein Thyristor.

Bei einem Fehlerfall im Umrichtermodul, beispielsweise einem Schaltversagen eines der Halbleiterschalter der Leistungshalbleiterschaltung, kann innerhalb des Umrichtermoduls ein Kurzschluss entstehen. In einem solchen Fall kann es insbesondere zu einer schlagartigen Entladung des Energiespeichers kommen. Ohne besondere Schutzmaßnahmen können dabei Stromamplituden eines Kurzschlussstromes durch die Leistungshalbleiterschaltung von über 1 MA auftreten. Ein solcher Kurzschlussstrom kann zu einer Explosion in der Leistungshalbleiterschaltung und zur Beschädigung bzw. Zerstörung der Halbleiterschalter führen. Zudem kann die Explosionsenergie zum Verbiegen oder Reißen von Stromschienen und zu einer Beschädigung eines Gehäuses der Leistungshalbleiterschaltung führen.

Der Schutz-Halbleiter des bekannten Umrichtermoduls ist dazu vorgesehen, in einem solchen Fehlerfall den Kurzschlussstrom zu übernehmen. Mittels des Schutz-Halbleiters wird der Energiespeicher im Fehlerfall niederohmig kurzgeschlossen, so dass die Leistungshalbleiterschaltung durch die Entladung des Energiespeichers nicht in Mitleidenschaft gezogen wird.

Das bekannte Umrichtermodul ist ein Teil eines modularen Mehrstufenumrichters, der eine Mehrzahl von Umrichterarmen bzw. Umrichterzweigen umfasst. Die Umrichterarme des bekannten Mehrstufenumrichters erstrecken sich jeweils zwischen einem eingangsseitigen und einem ausgangsseitigen Wechselspannungsanschluss des Mehrstufenumrichters. Jeder Umrichterarm umfasst eine Reihenschaltung der Umrichtermodule. Ein solcher modularer Mehrstufenumrichter weist die vorteilhafte Eigenschaft auf, dass die mittels des modularen Mehrstufenumrichters eine mehrstufige Ausgangsspannung nahezu beliebiger Form erzeugt werden kann. Die Anzahl der erzeugbaren Stufen der Ausgangsspannung ist durch die Anzahl der Umrichtermodule in den Umrichterarmen bestimmt. Ein weiterer Vorteil des modularen Mehrstufenumrichters ist, dass in einem Fehlerfall eines der Umrichtermodule mittels einer Überbrückung dieses fehlerhaften Umrichtermoduls die Betriebsfähigkeit des modularen Mehrstufenumrichters weiterhin sichergestellt werden kann.

In dem Beitrag von NICOLAS P LABBE: "An innovative currentlimiting device for automotive micro-hybrid starter motors", ELECTRICAL MACHINES (ICEM), 2012 XXTH 05 INTERNATIONAL CONFERENCE ON, IEEE, 2. September 2012 ist eine Schaltung beschrieben, die eine seriell in die Leitung eingefügte Primärwicklung umfasst, deren zugehörige Sekundärwicklung widerstandsbehaftet kurzgeschlossen ist.

Aus der WO 2013/044961 A1 ist ein Schaltmodul für einen Umrichter bekannt, bei dem die Ansteuerschaltung des Schutzthyristors, der im Schaltmodul parallel zum Energiespeicher ist, eine Induktivität umfasst, die in Reihe zum Energiespeicher geschaltet ist.

In der US 2014/0226374 A1 ist ein weites Schaltmodul mit einer Schutzschaltung für den Energiespeicher offenbart.

Aus der WO 2016/203517 A1 und der JP 2013 169088 A ist jeweils eine Schaltung mit einem Schutzthyristor in Parallelschaltung zum Energiespeicher bekannt. In der JP 2013 169088 A wird darüber hinaus ein Spannverband für den Schutzthyristor offenbart.

In der WO 2016/128643 A1 ist eine Begrenzungsschaltung für ein Motorfahrzeug mit einem Transformator beschrieben, dessen Primärwicklung seriell in eine Leitung und dessen Sekundärwicklung widerstandsbehaftet kurzgeschlossen ist.

Die WO 2014/090272 A1 beschreibt ein Schaltmodul mit einer RL-Parallelschaltung in Reihe zum Energiespeicher.

Die Aufgabe der vorliegenden Erfindung besteht darin, ein eingangs genanntes Umrichtermodul mit einer weiter verbesserten Schutzvorrichtung vorzuschlagen.

Die Aufgabe wird durch ein Umrichtermodul gemäß Anspruch 1 gelöst.

Bei einer unkontrollierten Entladung des Energiespeichers im Fehlerfall kann mittels des Strombegrenzers die Amplitude des Kurzschlussstroms begrenzt werden. Auf diese Weise können die negativen Auswirkungen des Kurzschlussstromes minimiert werden.

Mittels des Strombegrenzers kann ein Stoßstrom, der im Fehlerfall im Gleichspannungszwischenkreis des Umrichtermoduls auftritt, begrenzt werden. Auf diese Weise kann vorteilhaft eine Zerstörung des Schutz-Halbleiters aufgrund eines hohen Stoßstromes vermieden werden, die ansonsten zu Austritt von Lichtbögen und Bruchstücken von Bauteilen führen kann. Als Gleichspannungszwischenkreis des Umrichtermoduls wird in diesem Zusammenhang der Stromkreis bezeichnet, der den Energiespeicher und die Leistungshalbleiterschaltung umfasst.

Zweckmäßigerweise ist der Strombegrenzer derart ausgelegt, dass er in einem Normalbetrieb des Umrichtermoduls niederinduktiv ist. Die strombegrenzende Eigenschaft des Strombegrenzers tritt geeigneterweise nur in einem Fehlerfall auf.

Zweckmäßigerweise ist der Schutz-Halbleiter in einem Normalbetrieb sperrend. Somit hat der Schutz-Halbleiter im Normalbetrieb keinen Einfluss auf die Arbeit des Umrichtermoduls bzw. des gesamten Stromrichters. Der Schutz-Halbleiter kann beispielsweise ein Thyristor oder ein anderer ansteuerbarer Halbleiterschalter sein. Der Schutz-Halbleiter kann dann im Fehlerfall gezündet, also eingeschaltet, werden. Nach der Zündung führt der hohe Kurzschlussstrom durch den Halbleiterschalter beispielsweise dazu, dass dieser durchlegiert, so dass ein dauerhafter niederohmiger Strompfad für den Kurzschlussstrom erzeugt ist.

Gemäß der Erfindung umfasst der Strombegrenzer eine Primärwicklung, die in Reihe zum Energiespeicher angeordnet ist, sowie eine Sekundärwicklung, wobei die Sekundärwicklung und die Primärwicklung magnetisch gekoppelt sind und die Sekundärwicklung widerstandsbehaftet kurzgeschlossen ist. Somit entspricht der Strombegrenzer einem sekundärseitig kurzgeschlossenen Transformator. Die Primärseite des Transformators ist aktiver Bestandteil des Gleichspannungszwischenkreises des Umrichtermoduls. Im Fehlerfall transformiert die Primärwicklung die aufgrund des steilen Stromanstiegs aufgenommene Spannung in die Sekundärwicklung, welche dabei durch ihren ohmschen Widerstand einen Teil der aufgenommenen elektrischen Energie in Wärme umwandelt. Der induktive Anteil der Primärwicklung sorgt für eine Begrenzung der Stromanstiegsgeschwindigkeit bzw. des Stoßstromes, wobei die über den Strombegrenzer erzeugte Gegenspannung die Amplitude des Kurzschlussstromes begrenzt. Zudem kann durch die im Kurzschlussfall erhöhte Induktivität auch die Frequenz des Kurzschlussstromes verringert werden. Auf diese Weise kann vorteilhaft eine Aussendung hochfrequenter magnetischer Felder reduziert werden, wodurch eine Störung benachbarter elektronischer Baugruppen minimiert werden kann. Darüber ist es möglich, mittels des Strombegrenzers zwischen 50% und 90% der im Gleichspannungszwischenkreis des Umrichtermoduls gespeicherten Energie dissipativ abzubauen.

Gemäß der Erfindung sind der Schutz-Halbleiter, die Primärwicklung und die Sekundärwicklung in einem mechanischen Spannverband fixiert. Der Schutz-Halbleiter, die Primärwicklung und die Sekundärwicklung des Strombegrenzers sind miteinander mechanisch verspannt. Dadurch kann eine besonders kompakte und mechanisch robuste Bauweise für die Schutzvorrichtung erreicht werden. Durch den kompakten Aufbau kann der Platzbedarf reduziert und damit auch ein Kostenvorteil erreicht werden.

Vorzugsweise sind die Leistungshalbleiterschaltung in einem Modulgehäuse und die Schutzvorrichtung außerhalb des Modulgehäuses angeordnet. Auf diese Weise sind der innere Aufbau der Leistungshalbleiterschaltung und der Schutzvorrichtung voneinander unabhängig, so dass auch bereits vorhandene, nicht erfindungsgemäße Umrichtermodule mit der Schutzvorrichtung aufgerüstet werden können. Dieser Aufbau bringt somit einen Kostenvorteil bei der Herstellung des Umrichtermoduls.

Bevorzugt weist der Schutz-Halbleiter einen Gate-Anschluss (Gate) auf, der mit einer Ansteuerschaltung verbunden ist, die induktiv mit einer Verbindungsleitung zwischen dem Energiespeicher und der Leistungshalbleiterschaltung gekoppelt ist. Der Schutz-Halbleiter ist bevorzugt ein ansteuerbarer Halbleiterschalter. Die Ansteuerschaltung ist mit dem Steueranschluss bzw. dem Gate des Schutz-Halbleiters verbunden und übernimmt die Ansteuerung des Schutz-Halbleiters. Die induktive Kopplung bewirkt, dass bei einem starken Stromanstieg im Gleichspannungszwischenkreis des Umrichtermoduls ein Strom in der Ansteuerschaltung induziert wird. Der Strom in der Ansteuerschaltung ist geeigneterweise dazu geeignet, den Schutz-Halbleiter zu zünden. Auf diese Weise ist eine einfache und zugleich wirksame Steuerung des Schutz-Halbleiters bereitgestellt.

Die induktive Kopplung kann durch eine Sensorwicklung realisiert sein, die um oder an der Verbindungsleitung angeordnet beziehungsweise geführt ist. Die Sensorwicklung ist beispielsweise derart angeordnet, dass die von der Sensorwicklung aufgespannte Fläche parallel zu einer Fläche ist, die von der Zwischenkreisschaltung aufgespannt ist. Dies sorgt für eine besonders zuverlässige induktive Kopplung der Ansteuerschaltung. Die induktive Kopplung ist geeigneterweise derart eingerichtet, dass ein Anstieg eines Kurzschlussstromes oberhalb 200 kA/µs zu einer Zündung des Schutz-Halbleiters führt. Damit führen insbesondere kleine Fehlerströme von 10 kA bis 20 kA, die betriebsbedingt im Umrichtermodul auftreten können, nicht zu einer (unnötigen) Zündung des Schutzhalbleiers.

Vorzugsweise umfasst die Ansteuerschaltung eine Kapazität, die zwischen dem Gate-Anschluss und einem Kathoden-Anschluss (Kathode) des Schutz-Halbleiters angeordnet ist. Die Kapazität ist dazu eingerichtet ist, durch die Abgabe einer in der Kapazität gespeicherten Energie, den Schutz-Halbleiter einzuschalten beziehungsweise zu zünden. Die Kapazität weist bevorzugt einen Kapazitätswert zwischen 10 Mikrofarad und 50 Mikrofarad auf.

Bevorzugt umfasst die Ansteuerschaltung einen Diac (auch als Zweichrichtungsdiode bezeichnet), der mit dem Gate-Anschluss des Schutz-Halbleiters verbunden ist. Anstelle des Diac ist auch jeder andere geeignete spannungsgesteuerte Schalter einsetzbar. Der Diac ist dazu eingerichtet, oberhalb einer vorbestimmten Spannungsschwelle leitend zu sein. Unterhalb der Spanungsschwelle bleibt der Diac sperrend. Die Spannungsschwelle kann zwischen 1 V und 100 V liegen, bevorzugt zwischen 10 V und 50 V. Mittels des Diacs kann vorteilhaft vermieden werden, dass kleine Spannungsschwankungen zum Zünden des Schutz-Halbleiters führen. Nach dem Überschreiten der Spannnungsschwelle bleibt der Diac niederohmig leitend, solange Strom fließt.

Die Ansteuerschaltung kann ferner ein Widerstandselement zur Strombegrenzung eines Stromes durch die Ansteuerschaltung umfassen. Ein Widerstandswert des Widerstandselements liegt bevorzugt zwischen 0,1 Ohm und 1 Ohm.

Die Kapazität und das Widerstandselement üben gemeinsam eine Filterfunktion als Tiefpass aus.

Die Leistungshalbleiter der Leistungshalbleiterschaltung können beispielsweise in einer Halbbrückenschaltung oder einer Vollbrückenschaltung miteinander verbunden sein. Gemäß einer Ausführungsvariante mit Vollbrückenschaltung weist die Leistungshalbleiterschaltung vier ein- und abschaltbare Leistungshalbleiter auf, die so mit dem Energiespeicher verschaltet sind, dass an Ausgangsklemmen des Umrichtermoduls eine an dem Energiespeicher abfallende Energiespeicherspannung, eine Nullspannung oder aber die inverse Energiespeicherspannung erzeugbar ist. Gemäß einer weiteren Ausführungsvariante mit Halbbrückenschaltung weist die Leistungshalbleiterschaltung zwei abschaltbare Leistungshalbleiter auf, die so mit dem Energiespeicher verschaltet sind, dass an Ausgangsklemmen des Schaltmoduls eine an dem Energiespeicher abfallende Energiespeicherspannung oder eine Nullspannung erzeugbar ist.

Die Erfindung betrifft ferner einen Spannungszwischenkreisumrichter mit einer Mehrzahl von Umrichterarmen, wobei jeder Umrichterarm eine Reihenschaltung von Schaltmodulen umfasst.

Ein solcher Spannungszwischenkreisumrichter, der ein modularer Mehrstufenumrichter ist, ist aus der bereits zuvor genannten DE 10 323 220 A1 bekannt. Dort erstrecken sich die Umrichterarme zwischen jeweils zugeordneten Wechselspannungsanschlüssen des Mehrstufenumrichters. Die Schaltmodule weisen jeweils eine Leistungshalbleiterschaltung in Vollbrückenausführung auf.

Ein modularer Mehrstufenumrichter, dessen Umrichterarme sich jeweils zwischen einem Gleichspannungspol und einem Wechselspannungsanschluss des Zwischenkreisumrichters erstrecken, ist aus der WO 2016/155837 A1 bekannt. Die Schaltmodule des Mehrstufenumrichters der WO 2016/155837 A1 weisen jeweils eine Leistungshalbleiterschaltung in Halbbrückenausführung auf.

Die Aufgabe der Erfindung besteht darin, einen artgemäßen Spannungszwischenkreisumrichter vorzuschlagen, der möglichst zuverlässig ist.

Die Aufgabe wird durch einen Spannungszwischenkreisumrichter nach Anspruch 9 gelöst.

Die Vorteile des erfindungsgemäßen Spannungszwischenkreisumrichters ergeben sich insbesondere aus den zuvor beschriebenen Vorteilen des erfindungsgemäßen Umrichtermoduls. Insbesondere die in einem Fehlerfall erreichte Zuverlässigkeit des erfindungsgemäßen Umrichtermoduls erhöht bei dessen Einsatz in einem Spannungszwischenkreisumrichter die Zuverlässigkeit der gesamten Anordnung.

Alle zuvor im Zusammenhang mit dem erfindungsgemäßen Umrichtermodul beschriebenen Merkmale und Ausführungsvarianten können selbstverständlich auch beim erfindungsgemäßen Spannungszwischenkreisumrichter einzeln oder in Kombination realisiert werden.

Die Erfindung soll im Folgenden anhand der Figuren 1 bis 4 weiter erläutert werden.
Figur 1 zeigt ein Ausführungsbeispiel eines erfindungsgemäßen Spannungszwischenkreisumrichters in einer schematischen Darstellung;
Figur 2 zeigt ein Umrichtermodul in einer schematischen Darstellung, welches nicht in den Schutzumfang der Ansprüche fällt;
Figur 3 zeigt ein Ausführungsbeispiel einer Ansteuerschaltung für ein erfindungsgemäßes Umrichtermodul in einer schematischen Darstellung.
Figur 4 zeigt ein Ausführungsbeispiel eines erfindungsgemäßen Umrichtermoduls in einer schematischen Darstellung.

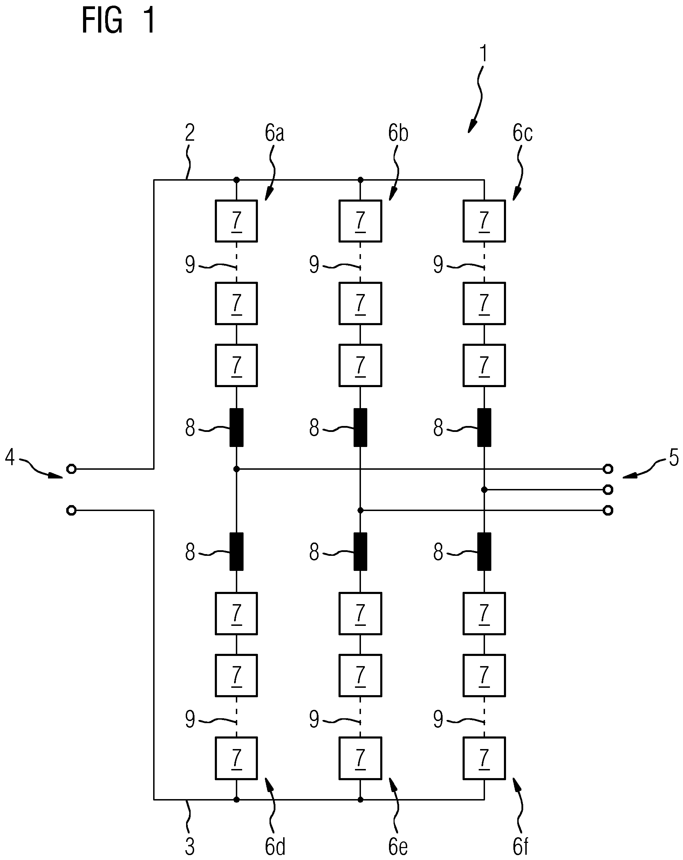

Figur 1 zeigt einen Zwischenkreisumrichter 1, der modularen Mehrstufenumrichter (MMC) ist. Der MMC 1 weist einen ersten Gleichspannungspol 2 und einen zweiten Gleichspannungspol 3. Der erste und der zweite Gleichspannungspol 2 bzw. 3 sind mit einer Gleichspannungsverbindung 4 verbunden, die zum Verbinden des MMC mit einem Gleichspannungsnetz dient. Der MMC 1 weist ferner einen Wechselspannungsanschluss 5 auf, der zum Anschluss des MMC 1 an ein dreiphasiges Wechselspannungsnetz eingerichtet ist. Zwischen jedem der beiden Gleichspannungspole 2, 3 und dem Wechselspannungsanschluss 5 erstrecken sich sechs gleichartig aufgebaute Umrichterarme 6a-f.

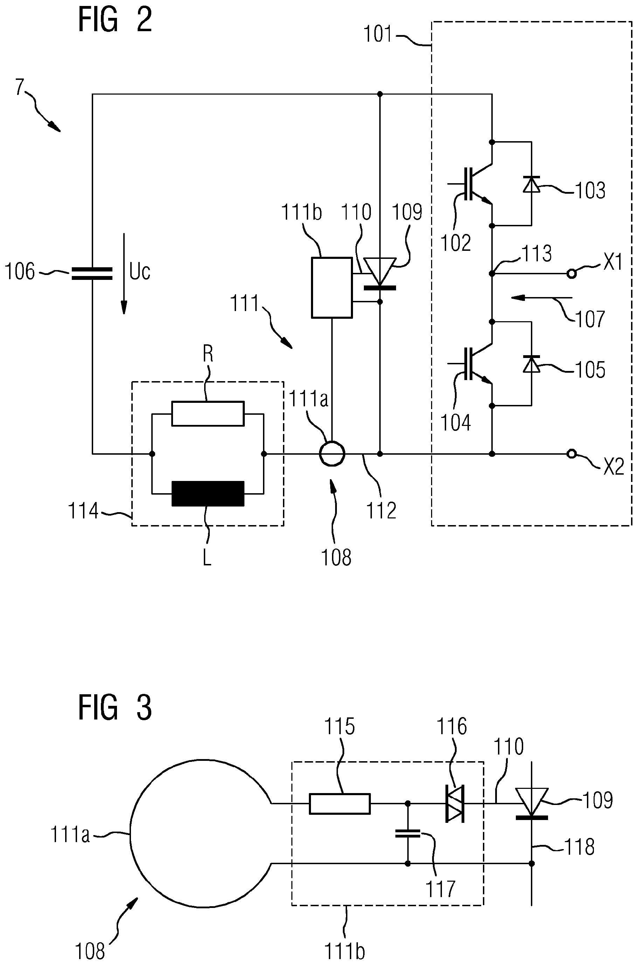

Der Phasenzweig 6a umfasst eine Reihenschaltung gleichartig aufgebauter zweipoliger Umrichtermodule 7. Die Anzahl der Umrichtermodule 7 ist grundsätzlich beliebig und auf die jeweilige Anwendung angepasst, was in Figur 1 durch die unterbrochenen Linien 9 angedeutet ist. In einer Reihenschaltung zu den Umrichtermodule 7 ist jeweils eine Glättungsdrossel 8 angeordnet. Auf den Aufbau der Umrichtermodule 7 wird in der nachfolgenden Figur 2 näher eingegangen.

Figur 2 zeigt im Einzelnen ein Umrichtermodul 7 welches nicht in den Schutzumfang der Ansprüche fällt. Das Umrichtermodul 7 umfasst eine Leistungshalbleiterschaltung in Form einer Halbbrückenschaltung 101. Die Halbbrückenschaltung 101 weist zwei Anschlüsse X1 und X2 auf. Der Anschluss X1 kann beispielsweise die Leistungshalbleiterschaltung 101 mit dem Anschluss X2 einer Leistungshalbleiterschaltung eines weiteren Umrichtermoduls 7 verbinden, so dass eine Reihenschaltung der Umrichtermodule 7 gebildet ist.

Die Leistungshalbleiterschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Leistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung Uc oder eine Spannung null abfällt.

Das Umrichtermodul 7 umfasst ferner eine Schutzvorrichtung 108 mit einem Schutz-Halbleiter in Form eines Thyristors 109, der parallel zum Energiespeicher 107 angeordnet ist. Das Gate 110 des Thyristors 109 ist mit einer Ansteuerschaltung 111 verbunden, die induktiv an eine Verbindungsleitung 112 zwischen dem Energiespeicher 106 und der Leistungshalbleiterschaltung 101 gekoppelt ist. Auf die Einzelheiten des Aufbaus der Ansteuerschaltung 111 wird in der nachfolgenden Figur 3 näher eingegangen. Die induktive Kopplung wird mittels einer Stromschleife lila realisiert, die derart ausgestaltet ist, dass die durch die Stromschleife 111a aufgespannte Fläche in etwa parallel zu der von der Parallelschaltung des Kondensators 106 und des Thyristors 109 aufgespannte Fläche liegt. Die Ansteuerschaltung 111 umfasst darüber hinaus eine Bauelementenanordnung 111b.

Die Schutzvorrichtung 108 umfasst ferner einen Strombegrenzer 114. Der Strombegrenzer 114 umfasst eine Parallelschaltung eines Widerstandselements R und einer Induktivität L.

Figur 3 zeigt den Aufbau der Ansteuerschaltung 108 für das Umrichtermodul 7 der Figuren 1, 2 und 4, wobei gleiche und gleichartige Bauelemente in allen Figuren 1 bis 4 mit gleichen Bezugszeichen versehen sind. Die Bauelementenanordnung 111b umfasst einen Widerstand 115 und einen Diac 116, die zwischen Gate 110 des Thyristors 109 und der Stromschleife 111a angeordnet sind. Ferner ist ein Kondensator 117 parallel zur Stromschleife 111a und zwischen dem Gate 110 und einer Kathode 118 des Thyristors 109 vorgesehen.

Bei einer fehlerverursachten, schlagartigen Entladung des Kondensators 106 induziert ein starker Anstieg eines Kurzschlussstroms durch die Verbindungsleitung 112 eine Spannung in der Stromschleife 111a. Sobald die Spannung einen vorbestimmten Schwellwert von 30 V überschreitet, wird der Diac 116 leitend, so dass der Thyristor 109 über dessen Gate 110 gezündet wird. Der Kurzschlussstrom wird damit über den Thyristor 109 geleitet, so dass die Leistungshalbleiterschaltung 101 vor einer Beschädigung bewahrt wird. Die Energie aus dem Kondensator 106 kann mittels des Strombegrenzers 114 abgebaut und in Wärme umgewandelt werden.

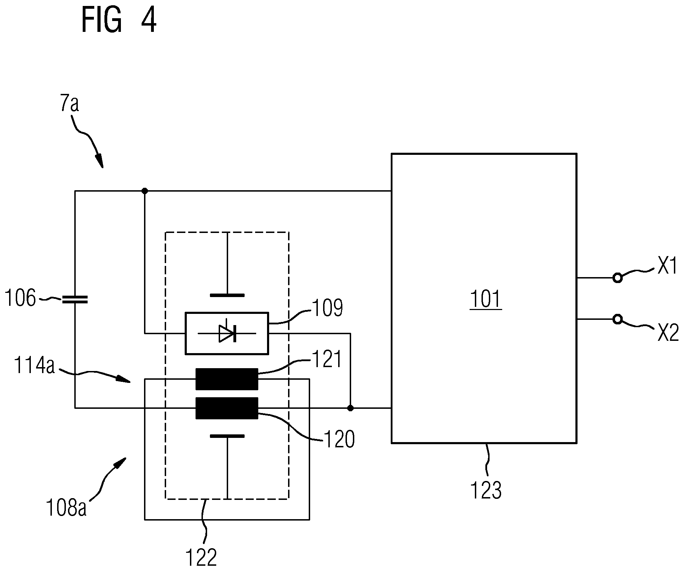

In Figur 4 ist ein Umrichtermodul 7a dargestellt, das eines oder mehrere der Umrichtermodule 7 in Figur 1 ersetzen kann. Im Unterschied zum Umrichtermodul 7 der Figur 2 umfasst das Umrichtermodul 7a eine Schutzvorrichtung 108a. Die Schutzvorrichtung 108a umfasst einen Strombegrenzer 114a mit einer Primärwicklung 120, die in Reihe zum Energiespeicher 106 angeordnet ist, sowie eine Sekundärwicklung 121, die kurzgeschlossen ist, ohne dass der Widerstand der Sekundärwicklung null ist (die Enden der Sekundärwicklung sind beispielsweise miteinander verbunden). Die Primär- und die Sekundärwicklung 120 beziehungsweise 121 sind miteinander magnetisch gekoppelt.

Darüber hinaus sind der Thyristor 109, die Primär- und die Sekundärwicklung 120 beziehungsweise 121 miteinander in einem mechanischen Spannverband 122 verspannt und fixiert. Der Spannverband 122 ist außerhalb eines Gehäuses 123 der Leistungshalbleiterschalter 101 angeordnet. Die Ansteuerschaltung des Thyristors 109 entspricht in ihrem Aufbau derjenigen aus Figur 3.

## Patentansprüche

1. Umrichtermodul (7a) für einen Spannungszwischenkreisumrichter (1) mit
- einer Leistungshalbleiterschaltung (101) mit wenigstens zwei Leistungshalbleiterschaltern (102, 104)
- einem Energiespeicher (106) in einer Parallelschaltung zu der Leistungshalbleiterschaltung(101), sowie
- einer Schutzvorrichtung (108) umfassend einen steuerbaren Schutz-Halbleiter (109), der in einer Parallelschaltung zum Energiespeicher (106) angeordnet ist,
die Schutzvorrichtung (108) ferner einen Strombegrenzer (114) zum Begrenzen von Stoßströmen umfasst, der in Reihe zum Energiespeicher (106) angeordnet ist
**dadurch gekennzeichnet, dass** der Strombegrenzer (114)
- eine Primärwicklung (120), die in Reihe zum Energiespeicher (106) angeordnet ist, sowie
- eine Sekundärwicklung (121) umfasst, wobei
die Sekundärwicklung (121) und die Primärwicklung (120) magnetisch gekoppelt sind und die Sekundärwicklung (121) widerstandsbehaftet kurzgeschlossen ist, wobei der Schutz-Halbleiter (109), die Primärwicklung (120) und die Sekundärwicklung (121) in einem mechanischen Spannverband (122) fixiert sind.

2. Umrichtermodul (7a) nach einem der vorangehenden Ansprüche, wobei die Leistungshalbleiterschaltung (101) in einem Modulgehäuse (123) und die Schutzvorrichtung (108) außerhalb des Modulgehäuses (123) angeordnet sind.

3. Umrichtermodul (7a) nach einem der vorangehenden Ansprüche, wobei der Schutz-Halbleiter (109) einen Gate-Anschluss (110) aufweist, der mit einer Ansteuerschaltung (111) verbunden ist, die induktiv mit einer Verbindungsleitung (112) zwischen dem Energiespeicher (106) und der Leistungshalbleiterschaltung (101) gekoppelt ist.

4. Umrichtermodul (7a) nach Anspruch 3, wobei die Ansteuerschaltung (111) eine Sensorwicklung (111a) umfasst, die um oder an der Verbindungsleitung (112) angeordnet ist.

5. Umrichtermodul (7a) nach einem der Ansprüche 3 oder 4, wobei die Ansteuerschaltung (111) eine Kapazität (117) umfasst, die zwischen dem Gate-Anschluss (110) und einem Kathoden-Anschluss (118) des Schutz-Halbleiters (109) angeordnet ist.

6. Umrichtermodul (7a) nach einem der Ansprüche 3 bis 5, wobei die Ansteuerschaltung (111) einen Diac (116) umfasst, der mit dem Gate-Anschluss (110) des Schutz-Halbleiters (109) verbunden ist.

7. Umrichtermodul (7a) nach einem der Ansprüche 3 bis 6, wobei die Ansteuerschaltung (111) ein Widerstandselement (115) umfasst.

8. Umrichtermodul (7a) nach einem der vorangehenden Ansprüche, wobei die Leistungshalbleiter (102, 104) der Leistungshalbleiterschaltung (101) in einer Halbbrückenschaltung oder einer Vollbrückenschaltung miteinander verbunden sind.

9. Spannungszwischenkreisumrichter (1) mit einer Mehrzahl von Umrichterarmen (6a-f), wobei jeder Umrichterarm (6a-f) eine Reihenschaltung von Schaltmodulen umfasst, wobei wenigstens eines der Schaltmodule ein Umrichtermodul (7a) nach einem der Ansprüche 1 bis 8 ist.

## Claims

1. Converter module (7a) for a voltage source converter (1) having
- a power semiconductor circuit (101) having at least two power semiconductor switches (102, 104)
- an energy store (106) in a parallel circuit with the power semiconductor circuit (101), and
- a protective device (108) comprising a controllable protective semiconductor (109), which is arranged in a parallel circuit with the energy store (106),
the protective device (108) also comprises a current limiter (114) for limiting surge currents and which is arranged in series with the energy store (106),
**characterized in that**
the current limiter (114) comprises
- a primary winding (120), which is arranged in series with the energy store (106), and
- a secondary winding (121), wherein
the secondary winding (121) and the primary winding (120) are magnetically coupled and the secondary winding (121) is shortcircuited in a resistive manner, wherein the protective semiconductor (109), the primary winding (120) and the secondary winding (121) are fixed in a mechanically clamped stack (122).

2. Converter module (7a) according to the preceding claim, wherein the power semiconductor circuit (101) is arranged in a module housing (123) and the protective device (108) is arranged outside of the module housing (123).

3. Converter module (7a) according to one of the preceding claims, wherein the protective semiconductor (109) has a gate terminal (110), which is connected to a drive circuit (111), which is inductively coupled to a connecting line (112) between the energy store (106) and the power semiconductor circuit (101).

4. Converter module (7a) according to Claim 3, wherein the drive circuit (111) comprises a sensor winding (111a), which is arranged around or on the connecting line (112).

5. Converter module (7a) according to one of Claims 3 or 4, wherein the drive circuit (111) comprises a capacitance (117), which is arranged between the gate terminal (110) and a cathode terminal (118) of the protective semiconductor (109).

6. Converter module (7a) according to one of Claims 3 to 5, wherein the drive circuit (111) comprises a diac (116), which is connected to the gate terminal (110) of the protective semiconductor (109).

7. Converter module (7a) according to one of Claims 3 to 6, wherein the drive circuit (111) comprises a resistance element (115) .

8. Converter module (7a) according to one of the preceding claims, wherein the power semiconductors (102, 104) of the power semiconductor circuit (101) are connected to one another in a half-bridge circuit or a full-bridge circuit.

9. Voltage source converter (1) having a plurality of converter arms (6a-f), wherein each converter arm (6a-f) comprises a series circuit of switching modules, wherein at least one of the switching modules is a converter module (7a) according to one of Claims 1 to 8.

## Revendications

1. Module (7a) d'un convertisseur (1) de tension à circuit intermédiaire, comprenant :
- un circuit (101) à semi-conducteur de puissance ayant au moins deux interrupteurs (102, 104) à semi-conducteur de puissance
- un accumulateur (106) d'énergie dans un circuit en parallèle avec le circuit (101) à semi-conducteur de puissance, ainsi que
- un système (108) de protection, comprenant un semi-conducteur (109) de protection pouvant être commandé, qui est monté suivant un circuit en parallèle avec l'accumulateur (106) d'énergie,
le système (108) de protection comprenant en outre un limiteur (114) de courant pour limiter des courants d'acoup, qui est monté en série avec l'accumulateur (106) d'énergie
caractérisé ce que le limiteur (114) de courant comprend :
- un enroulement (120) primaire, qui est monté en série avec l'accumulateur (106) d'énergie, ainsi que
- un enroulement (121) secondaire, dans lequel
l'enroulement 121 secondaire et l'enroulement (120) primaire sont couplés magnétiquement et l'enroulement (121) secondaire est court-circuité à résistance, le semi-conducteur (109) de protection, l'enroulement (120) primaire et l'enroulement (121) secondaire étant immobilisés en un assemblage (122) mécanique de serrage.

2. Module (7a) de convertisseur suivant l'une des revendications précédentes, dans lequel le circuit (101) à semi-conducteur de puissance est disposé dans un boîtier (123) du module et le système (108) de protection est disposé à l'extérieur du boîtier 123 du module.

3. Module (7a) suivant l'une des revendications précédentes dans lequel le semi-conducteur (109) de protection a une borne (110) de grille, qui est reliée à un circuit (111) d'excitation, qui est couplé inductivement à une ligne (112) de liaison entre l'accumulateur 106 d'énergie et le circuit 101 à semi-conducteur de puissance.

4. Module (7a) suivant la revendication 3, dans lequel le circuit (101) d'excitation comprend un enroulement (111) de capteur, qui est monté autour ou sur la ligne (112) de liaison.

5. Module (7a) suivant l'une des revendications 3 ou 4,
dans lequel le circuit (111) d'excitation comprend une capacité (117), qui est montée entre la borne (110) de grille et une borne (118) de cathode du semi-conducteur (109) de protection.

6. Module (7a) suivant l'une des revendications 3 à 5, dans lequel le circuit (111) d'excitation comprend un diac (116), qui est connecté à la borne (110) de grille du semi-conducteur (109) de protection.

7. Module (7a) suivant l'une des revendications 3 à 6, dans lequel le circuit (111) d'excitation comprend un élément (115) de résistance.

8. Module (7a) suivant l'une des revendications précédentes dans lequel les semi-conducteurs (102, 104) de puissance du circuit (101) à semi-conducteur de puissance sont connectés entre eux en un circuit à demi-pont ou en un circuit à pont complet.

9. Convertisseur (1) de tension à circuit intermédiaire ayant une pluralité de bras (6a-f) de convertisseur, chaque bras (6a-f) de convertisseur comprenant un circuit série de modules de coupure, dans lequel au moins l'un des modules de coupure est un module (7a) de convertisseur suivant l'une des revendications 1 à 8.
